# FASCICULE DE BREVET EUROPEEN

(11) **EP 3 271 960 B1**
(45) Date de publication et mention de la délivrance du brevet: **02.12.2026**
(21) Numéro de dépôt: 16712968.3
(22) Date de dépôt: 14.03.2016
(51) Int. Cl.: H01M 8/04, C25B 1/04, C25B 15/02, H01M 8/24, H01M 8/12, H01M 8/18

(54) **DÉTECTION DE FUITE SUR UN ÉLECTROLYSEUR OU UNE PILE À COMBUSTIBLE À HAUTE TEMPÉRATURE**
LECKAGE-DETEKTION IN EINEM ELEKTROLYSEUR ODER EINER HOCHTEMPERATUR-BRENNSTOFFZELLE
DETECTION OF A LEAKAGE IN AN ELECTROLYSER OR A HIGH TEMPERATURE FUEL CELL

(30) Priorité: 19.03.2015 FR 1552252
(43) Date de publication de la demande: 24.01.2018
(73) Titulaire: Commissariat à l'Energie Atomique et aux Energies Alternatives, 75015 Paris (FR)
(72) Inventeur: CHATROUX, André, 38210 Tullins (FR); DONNIER-MARECHAL, Thomas, 38100 Grenoble (FR)
(74) Mandataire: Ipsilon
(86) Numéro de dépôt international: PCT/FR2016/050555
(87) Numéro de publication internationale: WO 2016/146923

(56) Documents cités:
- WO-A1-2013/038051
- FR-A1- 2 957 360
- FR-A1- 3 001 789
- JP-A- 2006 253 096
- JP-A- 2013 161 754
- JP-A- 2013 161 754

## Description

### DOMAINE DE L'INVENTION

L'invention concerne les dispositifs électrochimiques à haute température, tels que les piles à combustible et les électrolyseurs à oxydes solides, et plus particulièrement la détection d'une fuite de gaz sur l'empilement de cellules électrochimiques dans la zone chaude.

### ETAT DE LA TECHNIQUE

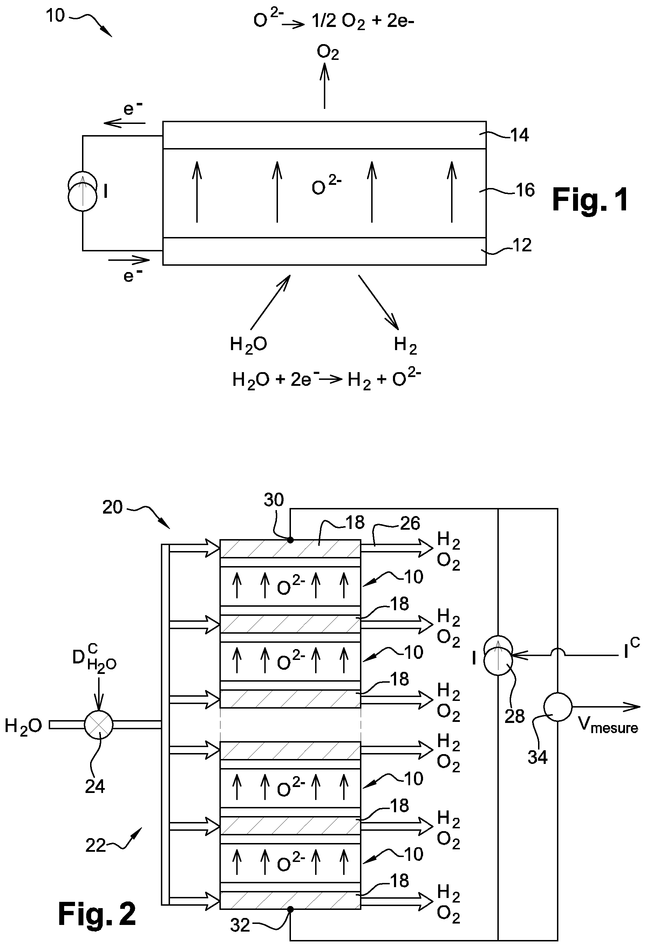

Comme cela est connu en soi, un électrolyseur de vapeur d'eau (H₂O) à haute température, ou électrolyseur EVHT (pour « électrolyse de la vapeur d'eau à haute température »), comprend un empilement de plusieurs cellules électrochimiques élémentaires à oxyde solide. En se référant à la figure 1, une cellule à oxyde solide **10,** ou « SOC » (acronyme anglo-saxon « *Salid Oxide Cell* ») comprend notamment :
a) une première électrode conductrice poreuse **12,** ou « cathode », destinée à être alimentée en vapeur d'eau pour la production de dihydrogène,
b) une seconde électrode conductrice poreuse **14,** ou « anode », par laquelle s'échappe le dioxygène (O₂) produit par l'électrolyse de l'eau injectée sur la cathode, et
c) une membrane à oxyde solide (électrolyte dense) **16** prise en sandwich entre la cathode **12** et l'anode **14,** la membrane **16** étant conductrice anionique pour de hautes températures, usuellement des températures supérieures à 600°C.

En chauffant la cellule **10** au moins à cette température et en injectant un courant électrique *I* entre la cathode **12** et l'anode **14,** il se produit alors une réduction de l'eau sur la cathode **12,** ce qui génère du dihydrogène (H₂) au niveau de la cathode **12** et du dioxygène au niveau de l'anode **14.**

Un empilement **20** de telles cellules, ayant pour but de produire une quantité importante d'hydrogène, est illustré par la vue schématique de la figure 2. Notamment, les cellules **10** sont empilées les unes sur les autres en étant séparées par des plaques d'interconnexion **18.** Ces plaques ont pour fonction à la fois d'assurer la continuité électrique entre les différentes électrodes des cellules **10,** permettant ainsi une mise en série électrique de celles-ci, et de distribuer les différents gaz nécessaires au fonctionnement des cellules, ainsi que le cas échéant un gaz porteur pour aider à l'évacuation des produits de l'électrolyse. Pour ce faire, les plaques **18** sont connectées à une alimentation **22** en vapeur d'eau pour l'injection de cette vapeur sur les cathodes des cellules **10** conformément à un débit de vapeur d'eau *D*_{*H*₂*O*} constant, réglé par une vanne pilotable **24.** Les plaques **18** sont également connectées à un collecteur de gaz **26** pour la collecte des gaz issus de l'électrolyse. Un exemple d'empilement et de structure de plaque d'interconnexion est par exemple décrit dans le document WO 2011/110676.

Un tel électrolyseur peut également fonctionner en co-électrolyse, c'est-à-dire avec un mélange de gaz en entrée cathodique composé de vapeur d'eau (H₂O) et de gaz carbonique (CO₂). Le mélange en sortie anodique est alors composé d'hydrogène (H₂), de vapeur d'eau (H₂O), de monoxyde de carbone (CO) et de gaz carbonique (CO₂).

Pour la mise en œuvre effective de l'électrolyse par l'empilement **20,** l'empilement est porté à une température supérieure à 600°C, usuellement une température comprise entre 650°C et 900°C, l'alimentation en gaz est mise en marche à débit constant et une source d'alimentation électrique **28** est branchée entre deux bornes **30, 32** de l'empilement **20** afin d'y faire circuler un courant *I*.

L'étanchéité entre les cellules à oxyde solide **10** et les plaques d'interconnexion **18** est usuellement réalisée par des joints qui constituent l'un des points faibles du système. Ces joints assurant l'étanchéité de l'empilement **20** vis-à-vis de l'atmosphère de la zone chaude sont fragiles et peuvent laisser fuir :
- l'hydrogène et la vapeur d'eau, si la fuite se situe côté cathodique, et/ou
- l'oxygène si la fuite se situe côté anodique.

Toutefois, en raison de la haute température de l'électrolyseur, il existe autour de celui-ci une zone, dont la température est proche de la température de l'empilement, et donc une zone pouvant atteindre des températures supérieures à 650°C. Or ces températures sont supérieures à la température d'auto-inflammation de l'hydrogène (571°C). La zone autour de l'électrolyseur, dans laquelle les températures sont suffisantes pour l'auto-inflammation des combustibles est usuellement appelée « zone chaude ». Elle correspond généralement à l'enceinte thermiquement isolée contenant le dispositif électrochimique. Sans mesure de sécurité particulière, il existe donc un risque d'incendie, voire d'explosion, si les fuites mènent à une accumulation d'hydrogène à proximité de l'électrolyseur. Pour garantir la sécurité vis-à-vis du risque explosif, la zone chaude est usuellement balayée avec un débit d'air suffisant pour réaliser la combustion de toute fuite de gaz combustible et éviter l'accumulation d'hydrogène. Notamment, l'enceinte dans lequel est logé l'électrolyseur comprend une entrée par laquelle de l'air est injecté, et une sortie d'air, ce qui permet donc de faire circuler l'air dans l'enceinte et ainsi renouveler régulièrement son contenu. Ainsi, il n'y a jamais accumulation de gaz combustible et aucun risque d'explosion. Cependant, cette solution impose un débit d'air très important qui doit être préchauffé à la température de l'enceinte sous peine de refroidir l'électrolyseur et ceci est particulièrement pénalisant du point de vue efficacité énergétique.

Si ces mesures évitent le risque d'explosion, elles ne permettent pas en soi de détecter une fuite de l'électrolyseur, et par conséquent ne permettent pas d'avertir l'exploitant de l'électrolyseur ou de mettre en œuvre une mise hors service automatique de l'électrolyseur. Plusieurs systèmes de détection de fuite ont été développés à cet effet.

Une première solution se fonde sur l'exothermicité de la réaction de combustion de l'hydrogène ayant fuité de l'électrolyseur, réaction donnant une flamme à plus de 2000°C qui provoque une élévation de la température de la zone chaude. En pratique, un (ou plusieurs) capteur(s) de température est (sont) donc disposé(s) dans l'enceinte logeant l'électrolyseur pour mesurer la température dans la zone chaude. Un boitier électronique peut ainsi être connecté au(x) capteur(s) de température et couper automatiquement l'électrolyseur lorsque la température mesurée dépasse un seuil de détection prédéterminé. Une telle solution est cependant peu précise. En effet, une même augmentation de température d'un thermocouple en zone chaude peut être due au rayonnement de la flamme d'hydrogène d'une petite fuite à proximité du thermocouple ou d'une grosse fuite mais éloignée du thermocouple. Afin d'éviter la détection erronée de fuite, le seuil de détection est donc surdimensionné, ce qui revient donc à détecter uniquement des fuites importantes d'hydrogène.

Une seconde solution consiste à placer dans l'enceinte un détecteur d'hydrogène, ou un explosimètre à hydrogène, pour mesurer le taux d'hydrogène du gaz de balayage de la zone chaude, et donc détecter une fuite d'hydrogène. Toutefois, les capteurs d'hydrogène ne fonctionnent pas au-delà d'une certaine température, et notamment les températures d'une zone chaude d'électrolyseur. Le capteur d'hydrogène est par conséquent placé dans une zone plus froide, placée en aval de la zone chaude du point de vue de la circulation d'air. Une analyse du signal fournit par le détecteur d'hydrogène peut ensuite être réalisée pour déterminer si la mesure dépasse un seuil nécessitant la mise en sécurité du système d'électrolyse. Toutefois, la combustion de l'hydrogène a lieu essentiellement dans la zone chaude, de sorte qu'une portion infime, voire nulle, d'hydrogène est susceptible d'être détectée par le capteur si la fuite est faible. De fait, seule une fuite importante d'hydrogène, menant à la consommation complète de l'oxygène, induit une présence détectable d'hydrogène au niveau du capteur. Seule une fuite importante d'hydrogène est donc détectable.

Des capteurs capables de fonctionner directement dans la zone chaude ont été développés. Cependant, ils n'apportent pas de réel avantage dans la mesure où ils ne détectent que l'hydrogène qui n'a pas été brulé dans l'air de balayage, ce qui correspond encore une fois à cas de fuite importante

Par ailleurs, les solutions développées ont pour objectif la détection directe ou indirecte d'une fuite d'hydrogène. Elles ne permettent donc pas de détecter une fuite d'oxygène du côté anodique de l'électrolyseur.

En d'autres termes, il n'existe pas dans l'état de la technique de solution permettant de détecter de fuite à la fois du côté cathodique et du côté anodique d'un électrolyseur EVHT, et qui soit capable de détecter des faibles fuites.

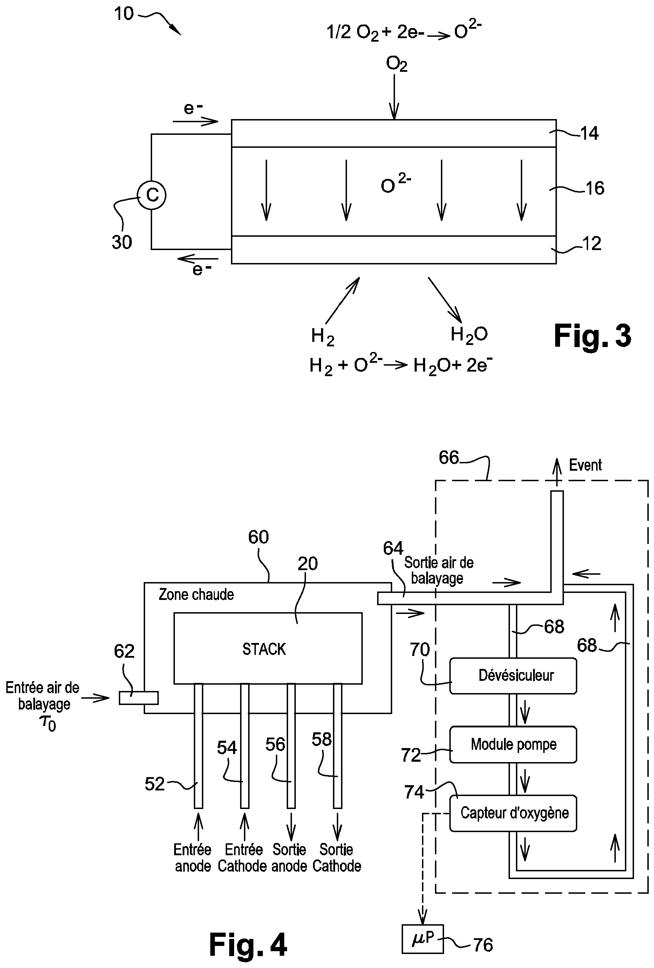

Une pile à oxyde solide à haute température, plus connue sous le nom de pile SOFC (pour « *solid oxyde fuel cell* ») connait des problèmes similaires. En effet, un électrolyseur EVHT et une pile SOFC sont des structures identiques, seul leur mode de fonctionnement étant différents. En se référant à la figure 3, une cellule électrochimique constitutive d'une pile SOFC comprend les mêmes éléments (anode **12,** cathode **14,** électrolyte **16**) qu'une cellule d'électrolyseur, la cellule de la pile étant cependant alimentée, avec des débits constants, sur son anode par du dihydrogène (ou un autre combustible comme du méthane CH₄), et sur sa cathode par du dioxygène (contenu dans l'air envoyé), et connectée à une charge C pour délivrer le courant électrique produit.

Tout comme un électrolyseur EVHT, une pile SOFC comprend un empilement de telles cellules électrochimique séparées par des plaques d'interconnexion pour leur connexion électrique et la distribution/collecte des gaz, empilement qui peut ne pas être étanche. La pile comprend également une zone chaude et soumise usuellement à un balayage d'air pour éviter l'accumulation de combustible.

Lorsque l'empilement de la pile à combustible à haute température est étanche, de la même façon que précédemment, les joints assurant l'étanchéité de l'empilement dans la zone chaude sont fragiles et peuvent laisser fuir :
- le combustible (H₂, CH₄,...) si la fuite se situe côté anodique, et/ou
- de l'air appauvri si la fuite se situe côté cathodique.

Par ailleurs, le document WO 2013/038051 décrit une pile à combustible avec un système de ventilation configuré pour déplacer une masse d'air autour de la pile à combustible. En sortie de ce circuit de ventilation, un capteur d'oxygène permet de détecter les fuites de la pile à combustible. Cependant, ce document WO 2013/038051 ne permet pas d'estimer le débit de fuite des combustibles de l'électrolyseur, avec une tolérance acceptable du point de vue de la sécurité et du point de vue économique, pour limiter les pertes de production.

De la même façon que précédemment, dans l'état de la technique, outre le document WO 2013/038051, seule une détection de la fuite d'hydrogène a été développé, plus particulièrement à base de détecteur hydrogène ou d'explosimètre pour analyser le gaz de balayage de la zone chaude, tel que cela est précédemment décrit.

En d'autres termes, outre le document WO 2013/038051, il n'existe pas non plus dans l'état de la technique, de solution permettant de détecter de fuite à la fois du côté cathodique et du côté anodique d'une pile SOFC. En outre, il n'existe pas de solution qui soit capable de détecter des faibles fuites.

### EXPOSE DE L'INVENTION

Le but de la présente invention est de proposer un système de détection d'une fuite sur un électrolyseur EVHT ou une pile SOFC, quel que soit le côté anodique ou cathodique où la fuite a lieu.

A cet effet l'invention a pour objet un système électrochimique comportant :
- un dispositif électrochimique formant électrolyseur de vapeur d'eau à haute température ou pile à combustible à haute température, le dispositif comprenant :
   ∘ un empilement de cellules électrochimiques élémentaires comprenant un électrolyte intercalé entre une cathode et une anode ;
   ∘ des conduites pour l'alimentation en gaz des anodes et des cathodes et pour la collecte de gaz produits par celles-ci;
- une enceinte dans laquelle est logé le dispositif électrochimique, et comprenant au moins une conduite d'entrée et une conduite de sortie de manière à faire circuler un débit d'air dans l'enceinte ; et
- un circuit d'analyse de l'air dans l'enceinte ;

Selon l'invention, le circuit d'analyse de l'air dans l'enceinte comporte :
- un capteur apte à mesurer un taux d'oxygène *τ*₁ présent dans la conduite de sortie de l'enceinte ; et
- un module d'analyse apte à diagnostiquer une fuite du dispositif lorsque le taux d'oxygène mesuré *τ*₁ diffère d'un taux d'oxygène prédéterminé *τ*₀ dans la conduite d'entrée de l'enceinte.

L'invention propose d'utiliser un capteur d'oxygène mesurant la teneur en oxygène de l'air en sortie de la zone chaude pour détecter une fuite de l'électrolyseur ou de la pile à combustible.

Pour le cas d'un électrolyseur haute température alimenté en vapeur d'eau (H₂O), la valeur *τ*₁ du pourcentage d'oxygène mesuré en l'absence de fuite dans l'air de balayage en sortie de zone chaude est normalement égale à celle de l'air injecté dans l'enceinte.

Si la valeur mesurée *τ*₁ diffère de la valeur d'entrée *τ*₀, cela signifie nécessairement la présence d'une fuite. Notamment, si le détecteur d'oxygène indique une valeur *τ*₁ < *τ*₀, c'est qu'une partie de l'oxygène de l'air de la zone chaude a été utilisé comme comburant par une fuite d'hydrogène, c'est-à-dire qu'il y a une fuite côté cathode.

Inversement, si le détecteur d'oxygène indique une valeur *τ*₁ > *τ*₀, c'est qu'une partie de l'oxygène produit par la réaction d'électrolyse fuit dans l'air de la zone chaude, c'est-à-dire que la fuite est située côté anode. Une fuite est donc détectée, qu'elle prenne place du côté anodique ou du côté cathodique de l'électrolyseur.

De même, pour le cas d'un co-électrolyseur haute température alimenté avec un mélange de vapeur d'eau (H₂O), et par exemple de gaz carbonique (CO₂), si le détecteur d'oxygène indique une valeur *τ*₁ *< τ*₀, c'est qu'une partie de l'oxygène de l'air de la zone chaude a été utilisé comme comburant par une fuite d'hydrogène ou de monoxyde de carbone, c'est-à-dire une fuite côté cathode. On note d'ailleurs que le monoxyde de carbone, qui est le produit de la co-électrolyse, subit également une auto-inflammation en zone chaude, sa température d'auto-inflammation étant en effet égale à 605°C. L'invention permet donc également de détecter une fuite de monoxyde de carbone, où à tout le moins des conséquences de celle-ci, à la différence des solutions axées uniquement sur la détection d'hydrogène.

Inversement, si le détecteur d'oxygène indique une valeur *τ*₁ > *τ*₀, c'est qu'une partie de l'oxygène produit par la réaction de co-électrolyse fuit dans l'air de la zone chaude, c'est-à-dire que la fuite est située côté anode. Là encore, une fuite est donc détectée, qu'elle prenne place du côté anodique ou du côté cathodique de l'électrolyseur.

Pour le cas d'une pile à combustible haute température alimentée avec un gaz combustible (H₂ ou CH₄ par exemple), si la valeur mesurée *τ*₁ diffère de la valeur d'entrée *τ*₀, cela signifie également nécessairement la présence d'une fuite dans la pile. En effet, lorsque le détecteur d'oxygène indique une valeur mesurée *τ*₁ < *τ*₀, cela peut être qu'une partie de l'oxygène de l'air de la zone chaude a été utilisé comme comburant par une fuite d'hydrogène ou de méthane, c'est-à-dire une fuite côté anode, ou alors cela peut être de l'air appauvri qui se mélange à l'air de balayage, c'est-à-dire que la fuite est située côté cathode. En mode pile à combustible, sauf si celle-ci est alimentée en oxygène pur ou en air enrichit, le détecteur d'oxygène n'indiquera jamais une valeur supérieure à *τ*₀. Cependant, il est tout de même remarquable que l'utilisation d'un détecteur d'oxygène soit un moyen de diagnostiquer une défaillance de joint sur une pile à combustible haute température, aussi bien côté anode que cathode.

Pour le cas d'un système réversible, pile à combustible et électrolyseur haute température, l'utilisation d'un détecteur d'oxygène permet donc la détection d'une fuite côté anode ou cathode dans la zone chaude avec l'avantage de permettre l'identification du côté en défaut en mode électrolyse.

Par ailleurs, le capteur d'oxygène est avantageusement positionné en zone froide, ce qui permet d'utiliser une large gamme de capteurs. En outre, en étant réalisée hors de la zone chaude, la mesure n'est pas perturbée par les phénomènes locaux qui s'y déroulent (convexion par exemple), et la mesure est indépendante de l'emplacement précis où se déroule la combustion. De fait, la précision de la détection est indépendante de la zone chaude et du phénomène de combustion lui-même, ce qui facilite donc la détection des faibles fuites. Par exemple, même en posant *τ*₀ égale à la valeur moyenne d'oxygène constatée dans l'air (20,95% au niveau de la mer, c'est-à-dire à « pression atmosphérique »), une détection précise est obtenue.

De plus, l'invention est applicable, que l'électrolyseur ou la pile fonctionne à pression atmosphérique ou à des pressions supérieures. Dans ce dernier cas, le détecteur d'oxygène peut même avantageusement être positionné dans une portion à pression atmosphérique. L'analyse est alors réalisée sur le gaz en sortie de zone chaude, préférentiellement après détente à pression atmosphérique.

L'invention fonctionne efficacement lorsque l'enceinte est étanche autour du dispositif électrochimique. Cependant, l'étanchéité de l'enceinte n'est pas une caractéristique essentielle car il suffit qu'une partie du gaz produit par le dispositif électrochimique soit captée par le circuit d'analyse pour déterminer si le dispositif électrochimique présente une fuite. De préférence, l'enceinte est configurée pour qu'au moins 50% des gaz issus du dispositif électrochimique en cas de fuite soient captés par le circuit d'analyse. Encore plus préférentiellement, l'enceinte est configurée pour qu'au moins 90% des gaz issus du dispositif électrochimique en cas de fuite soient captés par le circuit d'analyse.

Selon un mode de réalisation, le circuit d'analyse comporte un module de pompage apte à pomper de l'air dans la conduite de sortie et à produire un flux d'air ayant un débit volumique maximal prédéterminé, et le capteur à oxygène mesure le taux d'oxygène en aval du module de pompage. En d'autres termes, certains capteurs à oxygène fonctionnent dans une plage de vitesses des gaz analysés prédéterminée. Le module de pompage permet notamment de prélever du gaz et de produire un flux compatible avec le capteur dans le cas où la circulation d'air dans l'enceinte est trop importante pour placer le capteur à oxygène directement dans le flux d'air.

Selon un mode de réalisation, le circuit d'analyse comporte un module d'asséchement pour assécher de l'air présent dans la conduite de sortie de l'enceinte, et le capteur mesure le taux d'oxygène de l'air asséché par le module d'asséchement. En d'autres termes, le module d'assèchement, par exemple un dévésiculeur, maintient le taux d'eau dans le gaz analysé par le capteur dans une gamme de fonctionnement privilégié des capteurs à oxygène. C'est en particulier ce qui est préconisé par les fournisseurs de capteur électrochimiques à électrolyte liquide.

Selon un mode de réalisation :
- le dispositif est un électrolyseur à haute température,
- le module d'analyse diagnostique une fuite au niveau des cathodes de l'électrolyseur lorsque *τ*₁ *< τ*₀ et diagnostique une fuite au niveau des anodes de l'électrolyseur lorsque *τ*₁ > *τ*₀.

En d'autres termes, comme décrit précédemment, l'invention permet également de détecter précisément le côté défaillant de l'électrolyseur.

Selon l'invention, le module d'analyse est apte à déterminer un débit de fuite de gaz au niveau des cathodes de l'électrolyseur selon la relation : ${D}_{{f}_{{H}_{2}}} = 2 . \left({τ}_{0}-{τ}_{1}\right) . {D}_{Air}$ expression dans laquelle ${D}_{{f}_{{H}_{2}}}$ est ledit débit de fuite et D*_{Air}* est le débit d'air dans l'enceinte.

En d'autres termes, l'invention est capable d'estimer le débit de fuite des combustibles de l'électrolyseur, à savoir le débit des gaz les plus dangereux. Cela permet notamment de vérifier si la fuite est tolérable du point de vue sécurité, c'est-à-dire que tout le combustible est bien brulé à l'intérieur de l'enceinte sans risque d'accumulation en zone froide. De plus, du point de vue économique, l'estimation de la fuite permet de déterminer si la perte de production est acceptable.

### BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments identiques, et dans lesquels :
- la figure 1 est une vue schématique d'une cellule électrochimique élémentaire d'un électrolyseur EVHT ;
- la figure 2 est une vue schématique d'un empilement de cellules selon la figure 1 ;
- la figure 3 est une vue schématique d'une cellule électrochimique d'une pile SOFC ; et
- la figure 4 est une vue schématique d'un système électrochimique selon l'invention incluant une zone chaude, les circuits d'entrée et de sortie des gaz, et la chaine de mesure incorporant un détecteur d'oxygène.

### DESCRIPTION DETAILLEE DE L'INVENTION

Dans ce qui suit, les termes « amont » et « aval » désignent des localisations dans des conduites et dérivations en fonction de la circulation des gaz dans celles-ci.

En se référant à la figure 4, le système selon l'invention comporte :
- un électrolyseur EVHT **20,** par exemple celui décrit en relation avec les figures 1 et 2 et comprenant un ensemble de conduites **52, 54, 56, 58** pour l'alimentation et la collecte des gaz des anodes et des cathodes des cellules électrochimiques de l'électrolyseur ;
- une enceinte **60** dans laquelle est logée l'électrolyseur **20,** les conduites **52, 54, 56, 58** traversant une paroi de l'enceinte **60** pour leur connexion à des circuits d'alimentation et de collecte de gaz (non représenté). L'enceinte **60** comporte également une conduite d'entrée d'air **62,** et une conduite de sortie d'air **64,** l'enceinte **60** étant par exemple partout ailleurs hermétique aux gaz et aux liquides. La conduite **62** est apte à être connectée un circuit d'alimentation d'air (non représenté) de manière à appliquer un balayage d'air de la zone chaude entourant l'électrolyseur **20,** l'air de balayage étant évacué par la conduite de sortie **64** ; et
- un dispositif d'analyse **66** d'air raccordé à la conduite de sortie **64** de l'enceinte **60.**

Le dispositif d'analyse **66** comporte :
- une boucle de dérivation **68** de la conduite de sortie **64** permettant de prélever du gaz de la conduite de sortie **64** et de réinjecter le gaz prélevé dans celle-ci en aval du prélèvement ;
- un module de séchage, notamment dévésiculeur **70,** pour ôter de l'eau comprise dans le gaz parcourant la dérivation **68 ;**
- un module de pompage **72,** disposé en aval du dévésiculeur **70,** pour prélever, au travers de ce dernier, du gaz dans la conduite de sortie **64** ;
- un capteur d'oxygène **74,** disposé en aval du module de pompage **70** et mesurant le taux d'oxygène délivré par ce dernier, et par conséquent le taux d'oxygène *τ*₁ du gaz présent dans la conduite de sortie **64;** et
- un module d'analyse **76** connecté au capteur d'oxygène pour recevoir le taux mesuré *τ*₁ et mettre en œuvre un traitement de ce taux afin de détecter une fuite de l'électrolyseur **20.**

Par exemple, l'air de balayage injecté dans l'enceinte est de l'air prélevé à l'extérieur, et présentant par conséquent à la pression atmosphérique un taux d'oxygène voisin de 20,95%, et le capteur d'oxygène **74,** a une gamme de mesure de 0% à 25% O₂, par exemple un oxymètre tel qu'utiliser pour la surveillance d'anoxie. Le capteur est par example un système de détection de la société Dräger , à savoir le « Transmetteur Polytron 7000 » avec capteur O2 LS (capteur électrochimique 3 électrodes compensé en température).

Le débit d'air de balayage D*_{Air}* (l/mn) introduit dans l'enceinte **60** par la conduite d'entrée **62** assure un renouvellement de *N* fois par minute de l'air contenu dans l'enceinte **60.** Le débit D*_{Air}* est ainsi égal à : ${D}_{Air} = N . {V}_{enceinte}$ où V_{enceinte} est le volume (en 1) de l'enceinte **60.**

Suivant le volume de l'enceinte **60** et le nombre *N* de renouvellements choisi, essentiellement dicté par des considérations de sécurité, le débit D*_{Air}* d'air de balayage peut être trop important pour une analyse directe, par exemple si la vitesse dans les lignes de gaz dépasse la valeur maximale préconisée par le constructeur du capteur d'oxygène.

Selon un mode de réalisation prenant en compte la contrainte précédente, mais aussi pour garantir qu'un débit de gaz circule toujours sur le détecteur d'oxygène, le module de pompage **72** est installé en série avec le capteur dans la dérivation **68.** Le module de pompage **72** est ainsi choisi pour produire un débit de gaz convenant au fonctionnement du capteur **74.**

Par ailleurs, lorsqu'une fuite sur l'empilement apparait côté cathodique, un certain débit de fuite du mélange de gaz H₂+H₂O entre dans l'enceinte **60.** Il y a donc une augmentation de la quantité de vapeur d'eau dans l'air de balayage, d'une part issue directement du mélange cathodique, et d'autre part suite à la combustion de l'hydrogène avec l'oxygène de l'air de balayage. Comme la température dans la conduite de sortie **64** est inférieure à celle dans l'enceinte **60,** voire même égale à la température ambiante, la vapeur d'eau risque de se condenser sur la paroi de la conduite **64** et la conduite de dérivation **68.** Selon un mode de réalisation permettant de protéger le capteur d'oxygène **74** d'éventuelles gouttes d'eau, et donc respecter les préconisations du constructeur sur la teneur maximale en humidité de l'air analysé, le dévésiculeur **70** est installé en série et en amont du capteur d'oxygène dans la dérivation **68.**

Suivant l'exemple précédent, correspondant à une fuite côté cathodique, la combustion de l'hydrogène avec l'oxygène de l'air de balayage va entrainer une baisse du taux d'oxygène dans l'air analysé par le capteur **74.** Ce dernier étant étalonné dans la gamme correspondant à l'air atmosphérique, il peut donner une mesure dans une plage typique allant de 0% à 25% d'oxygène dans l'air analysé. Le taux d'oxygène standard étant *τ*₀ = 20,95%, et correspondant donc au taux d'oxygène introduit dans l'enceinte **60,** une mesure *τ*₁ de valeur inférieure à *τ*₀ correspond à une baisse du taux d'oxygène dans l'air, et traduit donc l'existence d'une fuite côté cathodique de l'empilement. Notamment, le module d'analyse **76** mémorise la valeur *τ*₀ et compare la mesure *τ*₁ à la valeur *τ*₀ et diagnostique la fuite du côté cathodique si *τ*₁ < *τ*₀.

Dans la plage de mesure du capteur d'oxygène **74,** une quantification du débit ${D}_{{f}_{{H}_{2}}}$ d'une fuite de dihydrogène ${D}_{{f}_{{H}_{2}}}$ est avantageusement mise en œuvre par le module d'analyse **76** qui mémorise la valeur D*_{Air}* selon la relation suivante : ${D}_{{f}_{{H}_{2}}} = 2 . \left({τ}_{0}-{τ}_{1}\right) . {D}_{Air}$

Par ailleurs, si la fuite est située côté anodique, une partie du mélange anodique d'air enrichi en oxygène entre dans l'enceinte **60,** ce qui entraine une augmentation du pourcentage d'oxygène dans le gaz analysé par le capteur **74.** Ainsi, le module d'analyse **76** diagnostique la fuite du côté anodique si *τ*₁ > *τ*₀.

Suivant un mode de réalisation, des seuils d'avertissement et/ou d'alarme peuvent être élaborés et entrainer des actions automatiques sur le pilotage de l'électrolyseur. Par exemple, le module d'analyse **76** est adapté pour stopper l'alimentation en gaz et en courant de l'électrolyseur.

Il a été décrit une application de l'invention à un électrolyseur de vapeur d'eau à haute température. L'invention s'applique également à un co-électrolyseur haute température alimenté avec un mélange de vapeur d'eau (H₂O) et de gaz carbonique (CO₂) et produisant une mélange d'hydrogène (H₂) et de monoxyde de carbone (CO). Dans ce cas, il convient d'appliquer les mêmes raisonnements et formules que précédemment en remplaçant la notion de débit de fuite ${D}_{{f}_{{H}_{2}}}$ d'hydrogène par la notion de débit de fuite ${D}_{{f}_{{H}_{2} + CO}}$ de gaz combustible H₂+CO.

L'invention s'applique également à une pile à combustible à oxyde solide à haute température constituée d'un empilement de cellules élémentaires électrochimiques, tel que décrit précédemment.

Dans un tel cas, une fuite côté combustible ou côté air appauvri se traduit dans les deux cas par un taux d'oxygène mesuré inférieur au taux d'oxygène de l'air de balayage. Le module d'analyse **76** diagnostique donc une fuite dès lors que *τ*₁ ≠ *τ*₀.

L'invention s'applique à un système réversible, pile à combustible et électrolyseur haute température. L'utilisation d'un détecteur d'oxygène permet la détection d'une fuite côté anode ou cathode dans la zone chaude, avec l'avantage de permettre l'identification du côté en défaut en mode électrolyse.

L'invention s'applique sur les systèmes précédemment décrits fonctionnant à pression atmosphérique, mais aussi sur des systèmes sous pression. Le détecteur d'oxygène peut avantageusement demeurer à pression atmosphérique. L'analyse est alors réalisée sur le gaz en sortie de zone chaude, préférentiellement après détente à pression atmosphérique.

Il a été décrit des modes de réalisation dans lesquels le taux d'oxygène de l'air injecté dans l'enceinte est une donnée constante *τ*₀, par exemple l'oxygène de l'air à la pression atmosphérique lorsque de l'air est injecté. En variante, le taux d'oxygène *τ*₀ est mesuré pour augmenter la précision de la détection, par exemple en disposant un dispositif analogue aux éléments **68 70, 72** et **74** dans la conduite d'entrée. Le deuxième capteur d'oxygène est alors connecté au module d'analyse **76** pour lui délivrer sa mesure.

Il a été décrit des comparaisons (inférieure, supérieure, différent) entre deux valeurs. Dans une variante, les comparaisons mises en œuvre utilisent des seuils, une fuite étant détectée lorsque le taux d'oxygène en sortie *τ*₁ diffère du taux d'oxygène en entrée *τ*₀ de plus d'une valeur prédéterminée, par exemple celle correspondant au débit de fuite d'hydrogène maximum acceptable du point de vue économique. Dans une variante, des seuils différents sont appliqués en fonction de la nature de la fuite.

Il a été décrit un dispositif d'analyse comprenant une dérivation et un module de pompage. Cette configuration rend la mesure d'oxygène insensible à la valeur du débit d'air de balayage dans la conduite de sortie de l'enceinte, et permet donc une mesure, y compris pour des débits trop importants pour une mesure d'oxygène directement dans la conduite de sortie. En variante, si le débit d'air de balayage permet une mesure directe dans la conduite de sortie, le dispositif de mesure comporte un capteur dans cette dernière, optionnellement en aval d'un dévésiculeur.

## Revendications

1. Système électrochimique comportant :
- un dispositif électrochimique (20) formant électrolyseur de vapeur d'eau à haute température ou pile à combustible à haute température, le dispositif comprenant :
∘ un empilement (20) de cellules électrochimiques élémentaires (10) comprenant chacune un électrolyte (16) intercalé entre une cathode et une anode (12, 14) ;
∘ des conduites (22) pour l'alimentation en gaz des anodes et des cathodes (12, 14) et pour la collecte des gaz produits par celles-ci;
- une enceinte (60) dans laquelle est logé le dispositif électrochimique (20) et comprenant au moins une conduite d'entrée (62) et une conduite de sortie (64) de manière à faire circuler un débit d'air dans l'enceinte (60); et
- un circuit (66) d'analyse de l'air dans l'enceinte ;
***caractérisé* en ce que** le circuit d'analyse (66) de l'air dans l'enceinte comporte :
- un capteur (74) apte à mesurer un taux d'oxygène *τ*₁ présent dans la conduite de sortie (64) de l'enceinte (60); et
- un module d'analyse (76) apte à diagnostiquer une fuite du dispositif (20) lorsque le taux d'oxygène mesuré *τ*₁ diffère d'un taux d'oxygène prédéterminé *τ*₀ dans la conduite d'entrée de l'enceinte ; le module d'analyse (76) étant apte à déterminer un débit de fuite des combustibles au niveau de la cathode selon la relation : ${D}_{{f}_{{H}_{2}}} = 2 . \left({τ}_{0}-{τ}_{1}\right) . {D}_{Air}$ expression dans laquelle ${D}_{{f}_{{H}_{2}}}$ est ledit débit de fuite des combustibles et D*_{Air}* est le débit d'air dans l'enceinte.

2. Système électrochimique selon la revendication 1, ***caractérisé* en ce que** le circuit d'analyse (66) comporte un module de pompage (72) apte à pomper de l'air dans la conduite de sortie (64) et à produire un flux d'air ayant un débit volumique maximal prédéterminé, et **en ce que** le capteur à oxygène (74) mesure le taux d'oxygène en aval du module de pompage (72).

3. Système électrochimique selon la revendication 1 ou 2, ***caractérisé* en ce que** le circuit d'analyse comporte un module d'asséchement (70) pour assécher de l'air présent dans la conduite de sortie (64) de l'enceinte (60), et **en ce que** le capteur d'oxygène (74) mesure le taux d'oxygène de l'air asséché par le module d'asséchement (70).

4. Système électrochimique selon l'une quelconque des revendications précédentes, ***caractérisé* en ce que** le dispositif (20) est un électrolyseur à haute température, et **en ce que** le module d'analyse (76) diagnostique une fuite au niveau des cathodes de l'électrolyseur lorsque *τ*₁ < *τ*₀ et/ou diagnostique une fuite au niveau des anodes du dispositif lorsque *τ*₁ > *τ*₀.

## Patentansprüche

1. Elektrochemisches System, das Folgendes umfasst:
- eine elektrochemische Vorrichtung (20), die als Hochtemperatur-Wasserdampf-Elektrolyseur oder als Hochtemperatur-Brennstoffzelle fungiert, wobei die Vorrichtung Folgendes umfasst:
∘ einen Stapel (20) aus elektrochemischen Elementarzellen (10), die jeweils einen Elektrolyten (16) umfassen, der zwischen einer Kathode und einer Anode (12, 14) angeordnet ist;
∘ Leitungen (22) zur Gaszufuhr der Anoden und Kathoden (12, 14) sowie zur Ableitung der Gase, die von diesen erzeugt werden;
- ein Gehäuse (60), in dem die elektrochemische Vorrichtung (20) untergebracht ist und das mindestens eine Einlassleitung (62) und eine Auslassleitung (64) umfasst, sodass ein Luftstrom durch das Gehäuse (60) zirkuliert; und
- eine Schaltung (66) zur Analyse der Luft in dem Gehäuse;
***dadurch gekennzeichnet*, dass** die Schaltung (66) zur Analyse der Luft in dem Gehäuse Folgendes umfasst:
- einen Sensor (74), der dazu ausgelegt ist, den Sauerstoffgehalt τ₁ in der Auslassleitung (64) des Gehäuses (60) zu messen; und
- ein Analysemodul (76), das geeignet ist, ein Leck in der Vorrichtung (20) zu diagnostizieren, wenn der gemessene Sauerstoffgehalt τ₁ von einem vorgegebenen Sauerstoffgehalt τ₀ in der Einlassleitung des Gehäuses abweicht; wobei das Analysemodul (76) geeignet ist, einen Leckdurchfluss der Brennstoffe an der Kathode in folgendem Verhältnis zu bestimmen: ${D}_{{f}_{{H}_{2}}} = 2 . \left({τ}_{0}-{τ}_{1}\right) . {D}_{Air}$ wobei ${D}_{{f}_{{H}_{2}}}$ in der Formel den Durchfluss der Brennstoffleckage und D_{Air} den Luftstrom in dem Gehäuse angibt.

2. Elektrochemisches System nach Anspruch 1, ***dadurch gekennzeichnet*, dass** die Analyseschaltung (66) ein Pumpmodul (72) umfasst, das dazu ausgelegt ist, Luft in die Auslassleitung (64) zu pumpen und einen Luftstrom mit einem vorbestimmten maximalen Volumenstrom zu erzeugen, und dass der Sauerstoffsensor (74) den Sauerstoffgehalt hinter dem Pumpmodul (72) misst.

3. Elektrochemisches System nach Anspruch 1 oder 2, ***dadurch gekennzeichnet*, dass** die Analyseschaltung ein Trocknungsmodul (70) zum Trocknen der Luft umfasst, die in der Auslassleitung (64) des Gehäuses (60) vorhanden ist, und dass der Sauerstoffsensor (74) den Sauerstoffgehalt der Luft misst, die durch das Trocknungsmodul (70) getrocknet wird.

4. Elektrochemisches System nach einem der vorstehenden Ansprüche***, dadurch gekennzeichnet*, dass** die Vorrichtung (20) ein Hochtemperatur-Elektrolyseur ist und dass das Analysemodul (76) eine Leckage an den Kathoden des Elektrolyseurs diagnostiziert, wenn τ₁ < τ₀ ist, und/oder eine Leckage an den Anoden der Vorrichtung diagnostiziert, wenn τ₁ > τ₀ ist.

## Claims

1. An electrochemical system comprising:
- an electrochemical device (20) forming a high-temperature steam electrolyzer or high-temperature fuel cell, the device comprising:
∘ a stack (20) of elementary electrochemical cells (10) each comprising an electrolyte (16) interposed between a cathode and an anode (12, 14);
∘ ducts (22) for supplying the anodes and the cathodes (12, 14) with gas and for collecting the gases generated by the latter;
- an enclosure (60) having the electrochemical device (20) housed therein and comprising at least one inlet duct (62) and one outlet duct (64) to circulate an air flow in the enclosure (60); and
- a circuit (66) for analyzing the air in the enclosure;
***characterized* in that** the circuit (66) for analyzing the air in the enclosure comprises:
- a sensor (74) capable of measuring an oxygen content τ₁ present in the outlet duct (64) of the enclosure (60); and
- an analysis unit (76) capable of diagnosing a leak of the device (20) when the measured oxygen content τ₁ differs from a predetermined oxygen content τ₀ in the inlet duct of the enclosure, said analysis unit (76) being capable to determine a fuel leak at the level of the cathode according to the following relation: ${D}_{{f}_{{H}_{2}}} = 2 . \left({τ}_{0}-{τ}_{1}\right) . {D}_{Air}$ in which expression ${D}_{{f}_{{H}_{2}}}$ is said leak fuel flow rate and D_{Air} is the air flow rate in the enclosure.

2. The electrochemical system of claim 1, ***characterized* in that** the analysis circuit (66) comprises a pumping unit (72) capable of pumping air from the outlet duct (64) and of generating an air flow having a predetermined maximum volume flow rate, and **in that** the oxygen sensor (74) measures the oxygen content downstream of the pumping unit (72).

3. The electrochemical system of claim 1 or 2, ***characterized* in that** the analysis circuit comprises a drying unit (70) for drying air present in the outlet duct (64) of the enclosure (60), and **in that** the oxygen sensor (74) measures the oxygen content in the air dried by the drying unit (70).

4. The electrochemical system of any of the foregoing claims, ***characterized* in that** the device (20) is a high-temperature electrolyzer, and **in that** the analysis unit (76) diagnoses a leak at the level of the electrolyzer cathodes when τ₁ < τ₀ and/or diagnoses a leak at the level of the anodes of the device when τ₁ > τ₀.
